(19) Europäisches Patentamt
European Patent Office
Office européen des brevets

(11) EP 3 888 030 B1

(12) **FASCICULE DE BREVET EUROPEEN**

(45) Date de publication et mention
de la délivrance du brevet:
**16.07.2025 Bulletin 2025/29**

(21) Numéro de dépôt: **19794580.1**

(22) Date de dépôt: **31.10.2019**

(51) Classification Internationale des Brevets (IPC):
**H02J 3/00** (2006.01)   **H02J 3/16** (2006.01)
**G06Q 10/04** (2023.01)   **G06Q 50/06** (2024.01)

(52) Classification Coopérative des Brevets (CPC):
**G06Q 10/04; G06Q 50/06; H02J 3/003;** H02J 3/16;
H02J 2203/20; Y02E 40/30; Y02E 60/00;
Y04S 10/50; Y04S 40/20

(86) Numéro de dépôt international:
**PCT/EP2019/079888**

(87) Numéro de publication internationale:
**WO 2020/108911 (04.06.2020 Gazette 2020/23)**

(54) **PRÉVISION DE LA PUISSANCE ÉLECTRIQUE TRANSITANT AU NIVEAU D'UN POSTE DE TRANSFORMATION ÉLECTRIQUE**

VORHERSAGE DER DURCH EINE ELEKTRISCHE TRANSFORMATIONSSTATION FLIESSENDEN ELEKTRISCHEN LEISTUNG

PREDICTION OF ELECTRICAL POWER PASSING THROUGH AN ELECTRICAL TRANSFORMATION STATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.11.2018 FR 1872021**

(43) Date de publication de la demande:
**06.10.2021 Bulletin 2021/40**

(73) Titulaire: **Enedis
92079 Paris La Defense Cedex (FR)**

(72) Inventeur: **BERCU, Sophie
92140 CLAMART (FR)**

(74) Mandataire: **Plasseraud IP
104 Rue de Richelieu
CS92104
75080 Paris Cedex 02 (FR)**

(56) Documents cités:
**FR-A1- 2 998 061**

• **J N FIDALGO ET AL: "Paper accepted for presentation at 2003 IEEE Forecasting Active and Reactive Power at Substations' Transformers", 26 June 2003 (2003-06-26), pages 1 - 6, XP055607703, Retrieved from the Internet <URL:https://ieeexplore.ieee.org/ielx5/9135/ 28969/01304157.pdf?tp=&arnumber=1304157& isnumber=28969& ref=aHR0cHM6Ly9pZWVleHBsb3JlLmllZ WUub3JnL2RvY3VtZW50LzEzMDQxNTc/ YXJudW1iZXI9MTMwNDE1Nw==> [retrieved on 20190722]**

• **ANONYMOUS: "Présentation du Dispositif d'Échange d'Informations d'Exploitation (DÉIE) entre Enedis et un Site Producteur raccordé en HTA sur le Réseau Public de Distribution", 1 March 2017 (2017-03-01), pages 1 - 31, XP055652065, Retrieved from the Internet <URL:https://www.enedis.fr/sites/default/files/ Enedis-NOI-RES_14E.pdf> [retrieved on 20191211]**

## Description

### Domaine technique

L'invention concerne le domaine de traitement de données de puissance électrique transitant au niveau d'un poste de transformation électrique. Un domaine d'application de l'invention est celui de la gestion prévisionnelle des réseaux de distribution dont le but est d'anticiper les contraintes sur le réseau de distribution et, le cas échéant, de mettre en place les leviers de résolution par anticipation. Les prévisions de consommation et de production (active P et réactive Q) constituent des données d'entrée essentielles de la gestion prévisionnelle.

### Technique antérieure

Un poste source est un ouvrage électrique qui se trouve à la jonction des lignes électriques de haute et moyenne tensions. Pour acheminer l'énergie électrique sur tout le territoire français, il faut d'abord réduire la tension, afin qu'elle s'adapte aux différents besoins des consommateurs ; c'est alors qu'intervient un poste-source qui transforme l'électricité en haute tension en moyenne tension. Il joue donc un rôle essentiel dans le système électrique global. Le poste source comprend des transformateurs, des équipements de surveillance, de protection et de télécommande (par exemple pour le changement de tarif), des équipements de comptage d'énergie et des systèmes automatiques de délestage pour contribuer à la sûreté du système électrique.

En électricité, l'énergie active désigne l'énergie qui est transformée intégralement en chaleur, en lumière ou en force motrice. L'énergie réactive complète l'énergie active dans le fonctionnement d'équipements tels que les transformateurs et les moteurs, en aimantant les parties magnétiques. Tous les réseaux électriques distribuent ces deux types d'énergie. Or la circulation de la puissance réactive sur les réseaux entraîne, du fait d'un courant appelé plus important, un échauffement des câbles d'alimentation, des pertes supplémentaires, des chutes de tension importantes, des surcharges au niveau des transformateurs, et contraint à un surdimensionnement des installations.

La gestion prévisionnelle des réseaux de distribution est un processus d'optimisation du fonctionnement des réseaux par anticipation des contraintes (en tension et en courant) et des leviers à mettre en œuvre pour les lever ou en diminuer l'impact. La gestion prévisionnelle s'appuie sur les prévisions de puissances (active uniquement aujourd'hui, le réactif étant déduit de la prévision d'actif par application d'un facteur de puissance constant) qui transitent au niveau des postes sources et sur les prévisions de production active des producteurs raccordés en moyenne et basse tension.

Les contraintes ont un impact sur le vieillissement prématuré des matériels constitutifs des réseaux de distribution et certains effets délétères pour les utilisateurs pouvant aller jusqu'à la coupure de leur alimentation. Une prévision de puissance intégrant le réactif permet de mieux estimer les contraintes. Par ailleurs, le fait de maitriser les flux de puissance réactive dans le processus de la gestion prévisionnelle, nous permettra d'envisager la mise en œuvre d'un nouveau levier : le levier réactif. Le papier "Forecasting Active and Reactive Power at

Substations' Transformers" de J. N. Figalgo (IEEE, 26 juin 2003) donne un aperçu de l'art antérieur.

### Problème technique

Aujourd'hui, la puissance réactive consommée/produite est modélisée dans les outils de gestion prévisionnelle par des facteurs de puissance constants. Cependant, le comportement des flux de puissance réactive a connu une évolution significative liée, entre autres, à l'évolution des usages raccordés sur le réseau, l'émergence des énergies renouvelables et l'enfouissement des lignes électriques. L'hypothèse de facteur de puissance constant n'est donc plus adaptée.

La Gestion Prévisionnelle requiert enfin, des prévisions de puissance à des mailles locales pour lesquelles, l'effet de foisonnement diminuant, les courbes de puissance sont plus difficiles à prévoir. En effet, la prévision au niveau d'une maille locale doit tenir compte d'un problème de variabilité spatio-temporelle plus importante qu'à un niveau agrégé. Une autre source de variation au niveau des postes sources provient des reports de charges lors de la reconfiguration du réseau et/ou l'activation d'automates de régulation varmétrique pour la régulation de puissance réactive par le biais de gradins de condensateurs. La situation de report de charge implique la mise en œuvre d'un schéma d'exploitation des réseaux dit « hors schéma normal » d'exploitation, un schéma normal correspondant à une topologie de réseau à pertes minimales.

L'enjeu est donc d'arriver à estimer/prévoir le flux de puissance réactive à une maille locale du réseau de distribution, en dehors d'événements tels que des ruptures liées à l'activation de gradins de condensateurs ou à un report de charge, afin de pouvoir alimenter les calculs de gestion prévisionnelle. Un autre enjeu est le traitement simultané de courbes de milliers de postes sources, de façon performante et rapide.

**Exposé de l'invention**

À cet effet, l'invention concerne un procédé de traitement de données de puissance électrique transitant au niveau d'un poste de transformation électrique d'un réseau de distribution d'électricité, comprenant les étapes suivantes :

a. Obtenir des données de puissance active et de puissance réactive mesurées au niveau dudit poste sur une période d'observation ;

b. Identifier, à partir des données de puissance mesurées sur la période d'observation, des données de puissance hors schéma normal d'exploitation au cours de ladite période d'observation, par un suivi de variation dans le temps de la puissance réactive et/ou de la puissance active et par détection de sauts dans ladite variation ;

c. Identifier au moins un type de situation à l'origine des données de puissance hors schéma normal d'exploitation identifiées ;

d. Traiter les données de puissance hors schéma normal d'exploitation Dhsne en fonction du type de situation identifié pour obtenir des données de puissance corrigées, et obtenir des données de puissance normalisées sur la période d'observation ;

e. Établir, par apprentissage à partir des données de puissance corrigées, un modèle de prévision de puissance réactive dudit poste en fonctionnement en dehors d'une situation du type de situation identifié à l'étape c).

La période d'observation peut avoir une durée allant de quelques mois à quelques années. Les données de puissance obtenues par mesure sont des données historiques de puissance ayant transité au niveau du poste de transformation. Une période hors schéma normal d'exploitation est une période au cours de laquelle les données de puissance sont identifiées comme étant hors schéma normal d'exploitation. La période d'observation peut comprendre une ou plusieurs périodes hors schéma normal d'exploitation. Un seul type de situation ou plusieurs types de situation peuvent être à l'origine des données de puissance hors schéma normal d'exploitation identifiées.

Ainsi, grâce à cette mise en œuvre, il est possible de prévoir la puissance réactive au niveau d'un poste source de manière plus précise, ledit procédé de traitement de données étant mis en œuvre à partir de données de puissance électrique historiques. Le modèle obtenu par apprentissage à partir des données de puissance corrigées comprend des paramètres ajustés de façon à minimiser l'écart entre les données estimées par le modèle et les données de puissance corrigées. Ledit procédé de traitement permet également d'établir un modèle de prévision contournant le problème de variabilité spatio-temporelle rencontré au niveau d'une maille locale.

Selon un mode de réalisation, la situation à l'origine des données de puissance hors schéma normal d'exploitation est une régulation de puissance réactive ou un report de charge sur le réseau de distribution d'électricité.

L'étape d'identification d'un type de situation permet de corriger les données de puissance hors schéma normal d'exploitation en fonction du type de situation identifié. La régulation de puissance réactive et le report de charge sont des situations liées à la conduite du réseau et peuvent perturber fortement un schéma normal d'exploitation du poste de transformation. Ces types de situation ont lieu lors d'interventions sur le réseau, d'incidents, de travaux ou bien d'autres contraintes souvent imprévisibles sur le réseau, au cours desquels le gestionnaire du réseau doit opérer une reconfiguration du réseau. Le réseau n'opère plus selon un schéma normal d'exploitation et les mesures de puissances réactives récupérées au niveau des postes sources ne correspondent plus aux mêmes utilisateurs (consommateurs et producteurs) qu'auparavant et sont dites « hors schéma normal d'exploitation ». Ces situations sont considérées comme étant « hors schéma normal d'exploitation », et ne doivent donc pas influencer le modèle de prévision de puissance réactive.

Selon un mode de réalisation, l'étape d'identification des données de puissance hors schéma normal d'exploitation comprend les sous-étapes suivantes :

b1. Obtenir, à partir des données de puissance mesurées sur la période d'observation, pour chacune des puissances active et réactive, une première courbe enveloppe majorant les données de puissance mesurées sur la période d'observation et une deuxième courbe enveloppe minorant les données de puissance mesurées sur la période d'observation ;

b2. Obtenir, à partir des première et deuxième courbes enveloppes, une courbe d'écart par calcul d'un écart entre la première courbe enveloppe et la deuxième courbe enveloppe ;

b3. Définir un intervalle d'écart, dont la borne supérieure correspond à la courbe d'écart et la borne inférieure correspond à l'opposé de la courbe d'écart ;

b4. Obtenir, à partir des première et deuxième courbes enveloppes, une courbe dérivée par calcul d'une dérivée d'une moyenne des première et deuxième courbes enveloppes ;

b5. Identifier deux sauts sur la période d'observation, le saut étant défini par un instant où une valeur de la courbe dérivée est en dehors de l'intervalle d'écart, le saut étant de type bas si la valeur est en dessous de l'intervalle d'écart et de type haut si la valeur est au-dessus de l'intervalle d'écart ;

b6. Obtenir, pour chacune des puissances active et réactive, une courbe par paliers, un palier étant obtenu par calcul de la moyenne des données de puissance mesurées sur un intervalle temporel défini par deux sauts consécutifs, le palier étant de type bas si le premier des deux sauts est bas et de type haut si le premier des deux sauts est haut.

La courbe par paliers obtenue à cette étape d'identification des données de puissance hors schéma normal d'exploitation permet, d'une part, d'identifier les périodes hors schéma normal d'exploitation et, d'autre part, d'identifier plus facilement un type de situation associé à une période hors schéma normal d'exploitation.

Selon un mode de réalisation, la situation à l'origine des données de puissance hors schéma normal d'exploitation est un report de charge sur le réseau de distribution d'électricité.

Selon ce mode de réalisation, des paliers du même type ayant lieu simultanément sur les courbes par paliers de chacune des puissances active et réactive sont identifiés comme des paliers de report de charge.

En effet, un report de charge au niveau du poste de transformation produit un effet spécifique sur la puissance électrique transitant au niveau dudit poste. Ce type de situation est identifiable à travers l'étude du type de palier sur chacune des courbes par paliers de puissance active et de puissance réactive.

Selon un mode de réalisation, l'étape de traitement des données de puissance hors schéma normal d'exploitation comprend les sous-étapes suivantes :

d1. Calcul de puissances corrigées $Y_t$ par une relation du type :

[Math. 1]

$$Y_t = (Z_t + \eta/\sigma).\sigma$$

où

[Math. 2]

$$Z_t = (X_t - \eta_x)/\sigma_x$$

$X_t$ désignant des données de puissance hors schéma normal d'exploitation sur une période hors schéma normal d'exploitation au cours d'un des paliers de report de charge, $\eta_x$ la moyenne de $X_t$, $\sigma_x$ l'écart-type de $X_t$ ; $\eta$ désignant la moyenne des puissances corrigées obtenue par calcul par interpolation linéaire entre la moyenne du palier précédant et la moyenne du palier suivant ledit palier ; $\sigma$ désignant l'écart-type des puissances corrigées obtenu par calcul par interpolation linéaire entre l'écart-type du palier précédant et l'écart-type du palier suivant ledit palier ;

d2. Obtention de données de puissances active et réactive corrigées par substitution desdites données de puissance hors schéma normal d'exploitation $X_t$ par les puissances corrigées $Y_t$ sur le palier de report de charge.

Le report de charge produisant un effet spécifique sur la puissance électrique transitant au niveau du poste source, les données de puissance hors schéma normal d'exploitation associées sont traitées et corrigées et/ou invalidées selon une étape de traitement spécifique.

Dans ce mode de réalisation, l'étape de traitement de données de puissance hors schéma normal d'exploitation peut être appliquée sur chacune des périodes hors schéma normal d'exploitation. Plus particulièrement, une période hors schéma normal d'exploitation peut correspondre à la durée d'un palier de report de charge.

Selon un mode de réalisation, la situation à l'origine des données de puissance hors schéma normal d'exploitation est une régulation de puissance réactive sur le réseau de distribution d'électricité.

Selon ce mode de réalisation, la régulation de puissance réactive est identifiée lorsque, dans la courbe par paliers de puissance réactive, deux paliers consécutifs ont une différence de valeur égale ou supérieure à 900 kVAr.

En effet, une régulation de puissance réactive au niveau du poste de transformation produit un effet spécifique uniquement sur la puissance réactive au niveau dudit poste (il n'y a pas d'effet sur la puissance active). Ce type de situation est identifiable à travers l'étude des différences de valeur entre les paliers de la courbe par paliers de puissance réactive.

Selon un mode de réalisation, l'étape de traitement des données de puissance hors schéma normal d'exploitation comprend les sous-étapes suivantes :

d1'. Calcul de puissances corrigées $Y_t$ par une relation du type :

[Math. 3]

$$Y_t = X_t - \eta_x + \eta$$

$X_t$ désignant des données de puissance hors schéma normal d'exploitation sur une période hors schéma normal d'exploitation d'un palier bas parmi les deux paliers consécutifs identifié comme un palier de régulation de puissance réactive, $\eta_x$ la moyenne de $X_t$ ; $\eta$ désignant la moyenne des puissances corrigées obtenue par calcul par interpolation linéaire entre la moyenne du palier précédant et la moyenne du palier suivant ledit palier ;

d2'. Obtention de données de puissances réactives corrigées par substitution desdites données de puissance hors schéma normal d'exploitation $X_t$ par les puissances corrigées $Y_t$ sur le palier de régulation de puissance réactive.

La régulation de puissance réactive produisant un effet spécifique sur la puissance réactive transitant au niveau du poste, les données de puissance hors schéma normal d'exploitation associées sont traitées et corrigées et/ou invalidées selon une étape de traitement spécifique.

Dans ce mode de réalisation, l'étape de traitement de données de puissance hors schéma normal d'exploitation peut être appliquée sur chacune des périodes hors schéma normal d'exploitation liée à une régulation de puissance réactive. Plus particulièrement, une période hors schéma normal d'exploitation peut correspondre à la durée dudit palier bas parmi les deux paliers consécutifs.

Selon un mode de réalisation, la sous-étape d2') est réalisée lorsque la période hors schéma normal d'exploitation est égale ou supérieure à une heure. Le seuil temporel au-delà duquel il est choisi de réaliser l'étape d2') est déterminé en fonction de l'impact de la période hors schéma normal d'exploitation sur l'ajustement du modèle et sa capacité de prédiction en schéma normal d'exploitation, c'est-à-dire en dehors de situations à l'origine des données de puissance hors schéma normal d'exploitation.

Selon un mode de réalisation, les données de puissance normalisées sont obtenues par : calcul à partir des données de puissance corrigées, pour un type de jour et/ou un type de saison, d'une borne de fonctionnement maximale à un instant t par une relation du type :

[Math. 4]

$$BORNEmax(t) = PROFIL(t) + 2.MAD(t)$$

et d'une borne de fonctionnement minimale par une relation du type :

[Math. 5]

$$BORNEmin(t) = PROFIL(t) - 2.MAD(t)$$

où MAD désigne la déviation absolue moyenne de la médiane et se calcule comme suit :

[Math. 6]

$$MAD(x_i) = médiane \left( |x_i - médiane(x_i)| \right)$$

$x_i$ désignant des données de puissance corrigées correspondant au même type de jour et/ou type de saison, et où PROFIL est obtenu par calcul de la médiane des données de puissance corrigées correspondant au même type de jour et/ou type de saison.

Les données de puissance normalisées permettent notamment d'identifier, sur les données de puissance corrigées de puissances active et réactive, des cycles jour/nuit, parfois des cycles été/hiver et d'autres régularités liés à l'activité des entreprises et des ménages.

Selon un mode de réalisation, le modèle de prévision de puissance réactive est établi par régression linéaire de type Group Lasso en fonction de variables explicatives.

L'apprentissage par régression linéaire de type Group Lasso est avantageux en grande dimension, lorsque le nombre de variables explicatives est supérieur ou égal au nombre d'observations, et que seul un nombre limité de ces variables a une influence notable sur les observations, ces variables étant dites « variables d'intérêt ». L'apprentissage par régression linéaire de type Group Lasso est également avantageux pour effectuer une sélection consistante d'un sous-ensemble restreint de variables d'intérêt, permettant souvent de mieux interpréter un modèle. Ces variables d'intérêt sélectionnées sont regroupées en groupes de variables d'intérêt. Enfin, un autre avantage de l'apprentissage par régression linéaire de type Group Lasso est le traitement simultané de courbes de centaines de postes sources, de façon performante et rapide.

Selon un mode de réalisation, les variables explicatives sont regroupées par type de variables, ledit type de variables étant choisi parmi une liste comprenant : variables autorégressives représentatives de données historiques, variables exogènes liées à la température, variables exogènes liées à des données de puissance active, variables exogènes liées à une période de l'année.

Un autre objet de la présente invention concerne un dispositif de traitement de données de puissances électriques transitant au niveau d'un poste de transformation électrique d'un réseau de distribution d'électricité, le dispositif comportant un circuit de traitement pour la mise en œuvre du procédé selon l'invention.

Un autre objet de la présente invention concerne un programme informatique comportant des instructions pour la mise en œuvre du procédé selon l'invention, dans lequel lesdites instructions sont exécutées par un processeur d'un circuit de traitement.

Les variables explicatives du modèle de prévision de puissance réactive par le poste comprennent des variables autorégressives représentatives de données historiques. Lors de la mise en œuvre du modèle de prévision, les données historiques de ces variables peuvent comprendre des données de puissance hors schéma normal d'exploitation.

Selon un mode de réalisation, le programme comporte en outre des instructions de prévision, pour un jour d'estimation, d'une puissance réactive transitant au niveau d'un poste de transformation électrique d'un réseau de distribution d'électricité, lesdites instructions de prévision comportant les étapes suivantes :

f1. Identification d'un fonctionnement hors schéma normal d'exploitation ou d'un fonctionnement en schéma normal d'exploitation dudit poste, par comparaison de données de puissance active et de puissance réactive de la veille du jour d'estimation, aux données de puissance normalisées ;

f2. Si un fonctionnement hors schéma normal d'exploitation est identifié en étape f1), calcul de la prévision de puissance réactive pour le jour d'estimation :

- selon un premier mode par application du modèle de prévision de puissance réactive obtenu à l'étape e) du procédé, à partir de données de puissance normalisées ;
- selon un deuxième mode par application du modèle de prévision de puissance réactive obtenu à l'étape e) du procédé, à partir de données de puissance historiques.

Ces étapes d'instructions de prévision permettent d'évaluer si, la veille du jour d'estimation, la puissance réactive transitant au niveau du poste est hors schéma normal d'exploitation. Cette évaluation est réalisée par comparaison entre la mesure de puissance réactive de la veille du jour d'estimation, et les données de puissance normalisées correspondant au type de jour et/ou au type de saison de la veille du jour d'estimation. S'il est identifié que la puissance réactive de la veille du jour d'estimation est hors schéma normal d'exploitation, la prévision de puissance réactive au jour d'estimation est calculée selon le premier mode où les données historiques des variables autorégressives du modèle sont remplacées par leurs données de puissance normalisées correspondantes, et selon le deuxième mode où les données historiques des variables autorégressives du modèle ne sont pas remplacées. Le calcul de la prévision de puissance réactive selon le deuxième mode comprend donc l'application du modèle de prévision à partir des données historiques des variables autorégressives, qui sont des données de puissance historiques obtenues par mesure au niveau du poste de transformation.

## Brève description des dessins

L'invention sera bien comprise, et ses avantages apparaîtront mieux à la lecture de la description détaillée qui suit de modes de réalisation de l'invention représentés à titre d'exemples non limitatifs :

**Fig. 1**

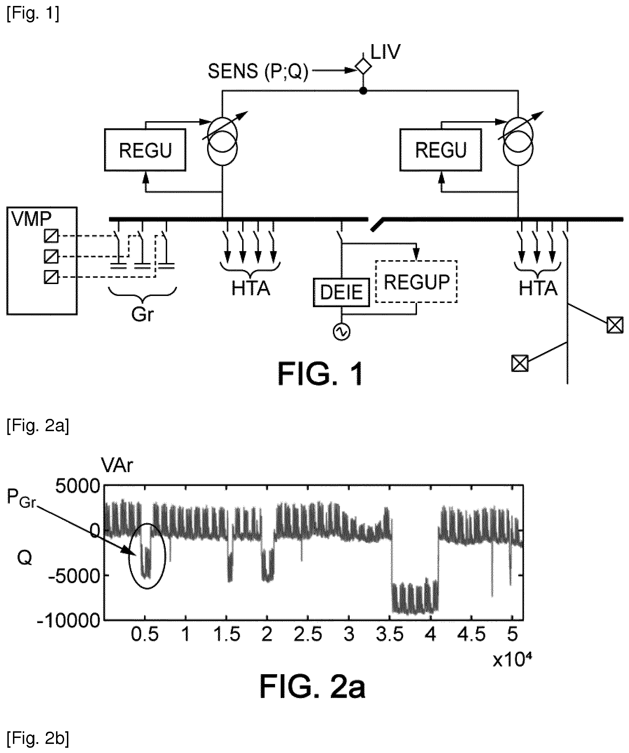

[Fig. 1] est un schéma fonctionnel représentant un poste de transformation électrique d'un réseau de distribution d'électricité ;

**Fig. 2a**

[Fig. 2a] représente une courbe temporelle de puissance réactive au niveau d'un poste source ;

**Fig. 2b**

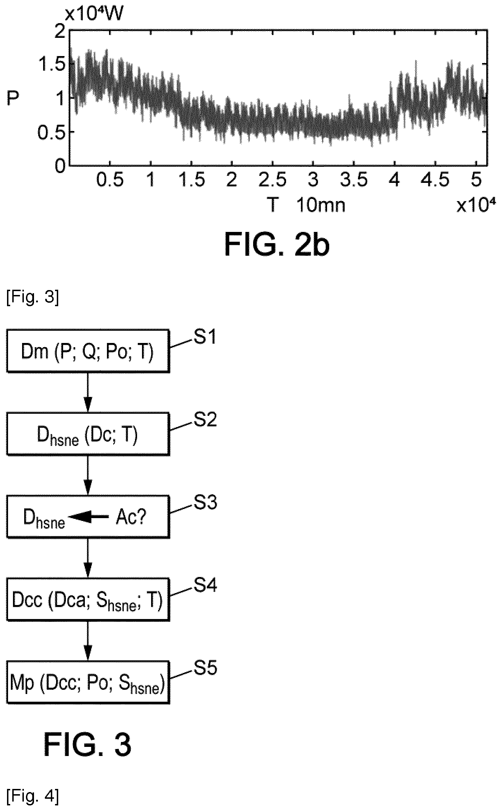

[Fig. 2b] représente une courbe temporelle de puissance active au niveau d'un poste source ;

**Fig. 3**

[Fig. 3] est un schéma fonctionnel d'un procédé de traitement de données de puissances active et réactive mesurées ;

**Fig. 4**

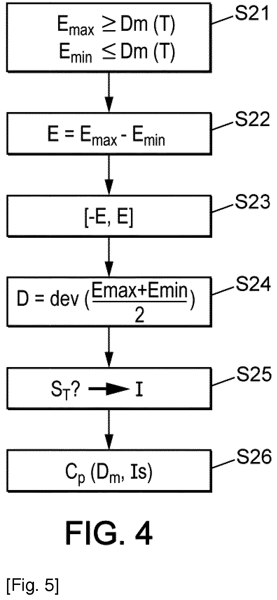

[Fig. 4] est un schéma fonctionnel d'une étape d'identification de données de puissance hors schéma normal d'exploitation ;

**Fig. 5**

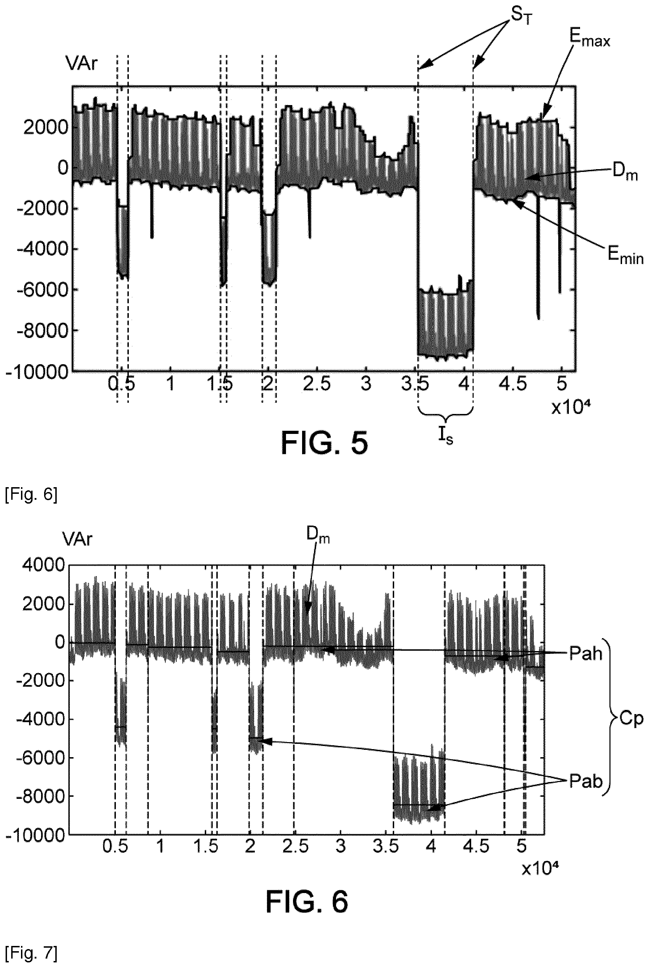

[Fig. 5] représente une courbe de puissance réactive lors de la mise en œuvre d'une sous-étape du procédé schématisé en figure 4 ;

**Fig. 6**

[Fig. 6] représente une courbe de puissance réactive lors de la mise en œuvre d'une autre sous-étape du procédé schématisé en figure 4 ;

**Fig. 7**

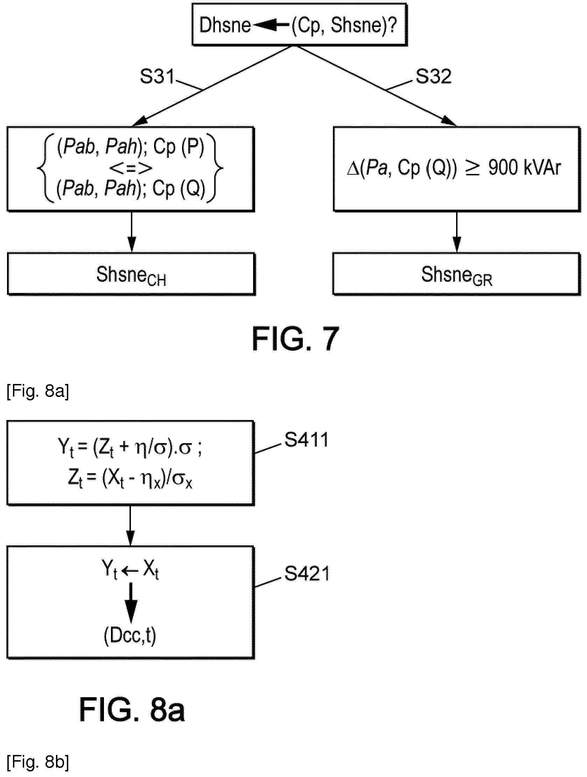

[Fig. 7] est un schéma fonctionnel d'une étape d'identification de type de situation à l'origine des données de puissance hors schéma normal d'exploitation ;

**Fig. 8a**

[Fig. 8a] est un schéma fonctionnel d'étapes de traitement de données de puissance hors schéma normal d'exploitation ;

**Fig. 8b**

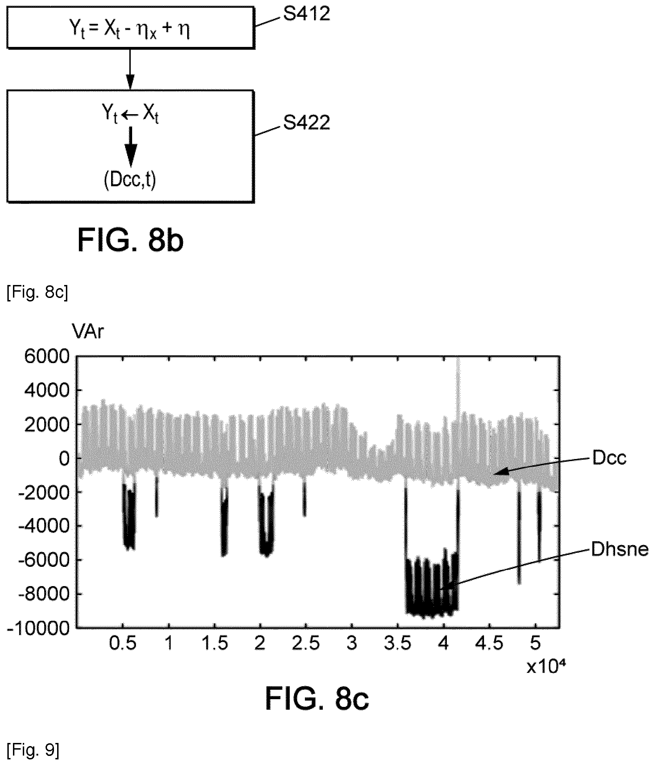

[Fig. 8b] est un schéma fonctionnel d'étapes de traitement de données de puissance hors schéma normal d'exploitation ;

**Fig. 8c**

[Fig. 8c] représente une courbe de puissance réactive à la suite de la mise en œuvre d'une sous-étape du procédé schématisé en figure 3 ;

**Fig. 9**

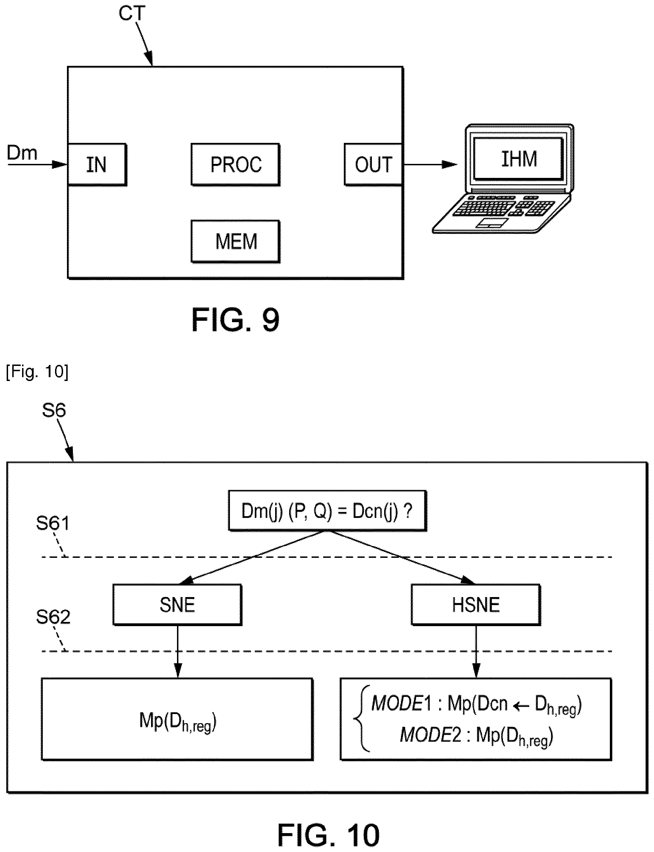

[Fig. 9] schématise l'exécution d'un programme informatique sur un dispositif ;

**Fig. 10**

[Fig. 10] est un schéma fonctionnel d'instructions de prévision dans le programme informatique.


**Description des modes de réalisation**

Les exemples qui suivent permettront de mieux appréhender la présente invention, sans pour autant en limiter la portée.

Sur les différentes figures, les mêmes références désignent des éléments identiques ou similaires.

La figure 1 est un schéma fonctionnel représentant un poste de transformation électrique Po d'un réseau de distribution d'électricité, dit également poste source. Le poste source Po abaisse la haute tension B (HTB) en haute tension A (ou HTA), ou en moyenne tension (MT), et permet à l'électricité de passer d'un réseau de transport jusqu'à des sites ou clients industriels qui sont directement raccordés au réseau, ou jusqu'à un réseau de distribution qui fait le lien avec des consommateurs notamment des particuliers. Le réseau de transport permet de transporter l'électricité depuis des producteurs d'électricité vers un poste de transformation tel que Po, grâce à un gestionnaire du réseau de transport d'électricité.

Des capteurs de puissance active et réactive SENS (P ; Q) sont disposés au point de livraison LIV du gestionnaire du réseau de transport d'électricité. Le poste source Po comprend des transformateurs à couplage réglable permettant d'effectuer une régulation REGU de façon à abaisser l'électricité haute tension B, excédant 50 000 volts en courant alternatif, en haute tension A (ou HTA) ou moyenne tension (MT), excédant 1 000 volts sans dépasser 50 000 volts en courant alternatif.

La compensation réactive au niveau du poste source Po est réalisée par un appareillage comprenant généralement des régulateurs varmétriques permettant la commutation automatique de gradins de condensateurs Gr afin de conserver un facteur de puissance cible. Les gradins de condensateurs sont constitués généralement de plusieurs condensateurs unitaires, monophasés ou triphasés, assemblés et interconnectés pour réaliser des ensembles de puissances appelés « batteries de condensateurs ». Des contacteurs électromécanique ou statique permettent d'établir ou d'interrompre le passage du courant, à partir d'une commande électrique ou pneumatique, notamment vers les gradins de condensateurs.

Le poste source Po comprend un dispositif DÉIE, qui est un Dispositif d'Échange d'Informations d'Exploitation entre un distributeur d'électricité et un Site Producteur raccordé en HTA sur le réseau, permettant la transmission immédiate d'informations nécessaires à une conduite à la fois fiable et réactive du réseau HTA. Une régulation REGUP de tension par le producteur peut également être effectuée à ce niveau.

Des disjoncteurs sont prévus au niveau du poste source Po et protègent le réseau contre d'éventuelles surcharges dues à des courants de défaut provoqués par exemple par la foudre ou par l'amorçage d'une branche d'arbre située trop près de la ligne. Les disjoncteurs permettent de mettre des portions de circuit sous ou hors tension. Des sectionneurs peuvent être prévus au niveau du poste source Po pour assurer une coupure visible d'un circuit électrique et aiguiller le courant dans le poste.

Les figures (2a, 2b) représentent deux courbes temporelles.

La courbe en figure 2a représente des données de puissance réactive Q mesurées au niveau du capteur SENS d'un poste de transformation électrique Po d'un réseau de distribution d'électricité, sur une période d'observation T d'une année à un pas de temps de 10 minutes. Les valeurs de puissance réactive Q sont exprimées en voltampère réactif (VAr), et varient entre -10000 VAr et 5000 VAr sur la courbe représentée en figure 2a. Les périodes référencées PGr sur la courbe indiquent des périodes de chute brutale de la puissance réactive mesurée au niveau du poste de transformation observé. Les périodes PGr de chute de puissance réactive peuvent être de durée variable. Les périodes PGr de chute de puissance réactive représentées en figure 2a sont dues à l'enclenchement de gradins de condensateurs, pour réaliser une régulation de puissance réactive au niveau du poste source Po.

La courbe en figure 2b représente des données de puissance active P mesurées au niveau du capteur SENS du même poste de transformation électrique Po, sur la même période d'observation. Les valeurs de puissance active P sont exprimées en Watt (W), et varient entre 0 et $2*10^4$ W sur la courbe représentée en figure 2b. Les valeurs de la puissance active P ne subissent pas de changements brutaux aux périodes Gr puisque l'enclenchement des gradins de condensateurs n'agit que sur la puissance réactive. En revanche, on observe une baisse progressive de la puissance active au milieu de l'année où il n'y a pas de consommation d'électricité pour le chauffage électrique.

La figure 3 représente un procédé de traitement de données de puissance électrique transitant au niveau du poste Po, en vue d'établir un modèle de prévision Mp de la puissance électrique au niveau du poste Po, en dehors des situations suivantes :

- la régulation de puissance réactive, effectuée notamment par des gradins de condensateurs ;
- les reports de charge entre postes sources.

Un report de charge correspond à une situation où, lors d'un incident, de travaux ou d'une intervention, une partie ou la totalité de la charge d'un poste source, dit secouru, est reprise par un ou plusieurs autres postes sources, dit(s) secourant(s). Les reports de charge permettent de reporter de la puissance active P au niveau des postes sources, et ont un impact sur la puissance réactive Q. Les reports de charge doivent donc être détectés lors de la construction d'un modèle de prévision Mp de puissance électrique réactive.

Une régulation de puissance réactive Q correspond à une situation où des gradins de condensateurs, qui sont des batteries de puissance réactive situées en aval des transformateurs des postes sources, sont activés soit automatiquement par un régulateur varmétrique lorsque la puissance réactive dépasse un certain seuil, soit manuellement par un chargé de conduite du réseau.

Comme représenté sur le diagramme de la figure 3, ledit procédé de traitement de données comprend une première étape S1 où des données de puissance active et de puissance réactive mesurées Dm au niveau dudit poste sont obtenues sur la période d'observation T.

À l'étape S2, des données de puissance hors schéma normal d'exploitation Dhsne sont identifiées, au cours de ladite période T, par un suivi de variation dans le temps de la puissance réactive Q et/ou de la puissance active P et par détection d'un saut dans ladite variation.

Plus particulièrement, l'identification de données de puissance hors schéma normal d'exploitation Dhsne au cours de ladite période T nécessite la détection de chutes brutales sur les données de puissance mesurés Dm, représentatives d'une situation Shsne à l'origine des données de puissance hors schéma normal d'exploitation.

L'étape S3 permet d'identifier au moins un type de situation Shsne à l'origine des données de puissance hors schéma normal d'exploitation Dhsne identifiées.

La situation Shsne à l'origine des données de puissance hors schéma normal d'exploitation peut être une régulation de puissance réactive ou un report de charge sur le réseau de distribution d'électricité.

Les données de puissance hors schéma normal d'exploitation Dhsne sont ensuite traitées à l'étape S4 en fonction du type de situation identifié, afin d'obtenir des données de puissance corrigées Dcc sur la période T.

À l'étape S5, un modèle est établi, par apprentissage à partir des données de puissance corrigées Dcc, et permet de prévoir la puissance réactive dudit poste en fonctionnement en dehors d'une situation du type de situation identifié à l'étape S3.

L'intérêt du développement d'un tel modèle est la prévision de la puissance (active P et réactive Q) transitant au niveau des postes sources, en vue d'anticiper les contraintes sur le réseau de distribution, de dimensionner de façon adéquate les postes sources, les réseaux de transport et de distribution et, le cas échéant, mettre en place des leviers de résolution par anticipation. La construction d'un modèle de prévision par apprentissage consiste en l'identification de schémas de consommation et de facteurs influents, à partir d'un historique de données de puissance électrique.

La puissance réactive Q mesurée au niveau des postes sources Po est soumise à des aléas liés à la consommation et à la production de puissance réactive par des utilisateurs sur le réseau en aval des postes Po. Ainsi, les courbes de puissance réactive Q présentent souvent des cycles jour/nuit, parfois des cycles été/hiver et d'autres régularités liées à l'activité des entreprises et des ménages. Les données de puissance récupérées dans ce cadre sont dites en « schéma normal d'exploitation » (SNE).

Cependant, comme représenté en figure 2, des aléas liés à la conduite du réseau peuvent perturber fortement ces schémas. Lors d'incidents, de travaux ou bien d'autres contraintes souvent imprévisibles, le gestionnaire du réseau de distribution doit opérer une reconfiguration du réseau. La puissance électrique transitant au niveau du poste Po sort alors du « schéma normal d'exploitation » (SNE) et les mesures de puissances réactives récupérées au niveau du poste source ne correspondent plus aux mêmes utilisateurs (consommateurs et producteurs) qu'en SNE. Ces situations Shsne entraînent un fonctionnement « hors schéma normal d'exploitation » (HSNE), ne doivent pas influencer le modèle de prévision Mp.

Lors de la détection d'une puissance hors schéma normal d'exploitation, deux types de situations de fonctionnement Hors Schéma Normal d'Exploitation en particulier sont traitées à l'étape S4 : les reports de charge et les régulations de puissances réactives notamment par gradins de condensateurs. L'étape S4 permet de corriger ou d'invalider des situations de fonctionnement Hors Schéma Normal d'Exploitation, et de calculer des bornes de fonctionnement en Schéma Normal d'Exploitation.

Comme représenté en figure 4, l'étape d'identification des données de puissance hors schéma normal d'exploitation Dhsne comprend une première étape S21 d'obtention, à partir des données de puissance mesurées sur la période T, pour chacune des puissances active P et réactive Q, d'une première courbe enveloppe $E_{max}$ majorant les données de puissance mesurées Dm sur la période T et une deuxième courbe enveloppe $E_{min}$ minorant les données de puissance mesurées Dm sur la période T.

Il s'agit d'une technique de traitement d'image, appelée « ouverture et fermeture », qui permet de calculer les courbes « enveloppes », l'une majorante ($E_{max}$) et l'autre minorante ($E_{min}$), qui encadrent (cf. figure 5) les courbes de puissance (active P ou réactive Q).

L'identification des données de puissance hors schéma normal d'exploitation Dhsne comprend l'étape S22 au cours de laquelle, pour chacune des puissances active P et réactive Q, une courbe d'écart E entre les deux courbes enveloppes est obtenue, par calcul d'un écart entre la première courbe enveloppe $E_{max}$ et la deuxième courbe enveloppe $E_{min}$ selon une relation du type :

[Math. 7]

$$E = Emax - Emin$$

Un intervalle d'écart [-E, E] est défini à l'étape S23, dont la borne supérieure correspond à la courbe d'écart E et la borne inférieure correspond à l'opposé de la courbe d'écart -E.

Une courbe dérivée D est obtenue à l'étape S24, à partir des première et deuxième courbes enveloppes $E_{max}$ et $E_{min}$, par calcul d'une dérivée d'une moyenne des première et deuxième courbes enveloppes $E_{max}$ et $E_{min}$ à travers une relation du type

[Math. 8]

$$D = dérivée\left(\frac{Emax + Emin}{2}\right)$$

L'étape S25 permet d'identifier des sauts $S_T$ sur la période T. Un saut est défini par un instant où une valeur de la courbe dérivée D sort de l'intervalle d'écart [-E, E].

Le saut est de type bas si la valeur D est en dessous de l'intervalle d'écart [-E, E] et correspond à un saut brutal avec une baisse de puissance réactive.

Le saut est de type haut si la valeur D est au-dessus de l'intervalle d'écart [-E, E] et correspond à un saut brutal avec une hausse de puissance réactive.

À l'étape S26, une courbe par paliers Cp est obtenue pour chacune des puissances active P et réactive Q. Un palier Pa est obtenu par calcul de la moyenne des données de puissance mesurées Dm sur un intervalle temporel Is défini par deux sauts $S_T$ consécutifs, le palier étant de type bas Pab si le premier des deux sauts $S_T$ est bas et de type haut Pah si le premier des deux sauts $S_T$ est haut. La courbe par paliers Cp est représentée en figure 6, et comporte plusieurs baisses de puissance réactive représentées par des paliers bas Pab. La baisse ou la hausse de puissance réactive peut en outre être appréciée en référence à des valeurs de puissance réactive attendues en Schéma Normal d'Exploitation.

Comme représenté en figure 7, à l'étape S31, une situation de type report de charge $Ac_{CH}$ sur le réseau de distribution d'électricité est identifié sur la courbe de paliers lorsque deux paliers du même type ont lieu simultanément sur les courbes par paliers de chacune des puissances active et réactive. Lesdits paliers du même type ayant lieu simultanément sont identifiés comme des paliers de report de charge.

Lorsque les paliers de report de charge sont bas Pab, il s'agit d'une période de baisse de charge. Lorsque les paliers de report de charge sont hauts Pah, il s'agit d'une période de hausse de charge.

Les données de puissance hors schéma normal d'exploitation Dhsne sont les données $X_t$, où t est un pas de temps de 10 minutes compris dans la période hors schéma normal d'exploitation.

Dans le cas d'une situation de type report de charge, l'étape de traitement des données de puissance hors schéma normal d'exploitation Dhsne est représentée en figure 8a et comprend l'étape S411 de calcul des puissances corrigées $Y_t$ par une relation du type :

[Math. 1]

$$Y_t = \left(Z_t + \frac{\eta}{\sigma}\right).\sigma$$

où

[Math. 2]

$$Z_t = (X_t - \eta_x)/\sigma_x$$

$X_t$ désigne les données de puissance hors schéma normal d'exploitation sur une période au cours d'un des paliers de report de charge.

$\eta_x$ désigne la moyenne des données $X_t$ sur la durée du palier de report de charge, et $\sigma_x$ l'écart-type des données $X_t$ sur cette même période.

$\eta$ est le résultat du calcul par interpolation linéaire entre les moyennes des paliers précédant et suivant ledit palier, et $\sigma$ est le résultat du calcul par interpolation linéaire entre les écart-types des paliers précédant et suivant ledit palier.

Des données de puissances actives et réactives corrigées Dcc sur la période hors schéma normal d'exploitation sont obtenues à l'étape S421 par substitution des données de puissance hors schéma normal d'exploitation $X_t$ par les puissances corrigées $Y_t$ sur chaque palier hors schéma normal d'exploitation, préférentiellement sur chaque palier de report de charge.

Dans une variante du procédé, une période de report de charge n'est corrigée que si sa durée est inférieure à une semaine.

Comme représenté en figure 7, à l'étape S31, une situation de type régulation de puissance réactive $Ac_{GR}$, notamment par gradins de condensateurs sur le réseau de distribution d'électricité, est identifié lorsque, dans la courbe par paliers de puissance réactive Cp(Q), deux paliers consécutifs ont une différence de valeur égale ou supérieure à 900 kVAr. Lesdits paliers consécutifs sont identifiés comme des paliers de régulation de puissance réactive.

Dans le cas d'une situation de type régulation de puissance réactive $Ac_{GR}$, l'étape de traitement des données de puissance hors schéma normal d'exploitation Dhsne est représentée en figure 8b et comprend l'étape S412 de calcul des puissances corrigées $Y_t$ par une relation du type :

[Math. 3]

$$Y_t = X_t - \eta_x + \eta$$

$X_t$ désigne les données de puissance hors schéma normal d'exploitation sur une période hors schéma normal d'exploitation au cours d'un palier bas Pab parmi les deux paliers consécutifs.

$\eta_x$ désigne la moyenne des données $X_t$ sur le palier Pab.

$\eta$ est le résultat du calcul par interpolation linéaire entre les moyennes des paliers précédant et suivant ledit palier.

Des données de puissance réactive corrigées sur la période hors schéma normal d'exploitation sont obtenues à l'étape S422 par substitution des données de puissance hors schéma normal d'exploitation Dhsne par les puissances corrigées $Y_t$ sur les paliers de régulation de puissance réactive dans les données de puissance mesurées.
Selon un mode de réalisation, la sous-étape S422 est réalisée lorsque la période hors schéma normal d'exploitation est égale ou supérieure à une heure.
L'obtention de données de puissance corrigées Dcc, dont un exemple est représenté en figure 8c, permet d'alimenter la construction du modèle de prévision Mp par apprentissage. Les données de puissance corrigées Dcc permettent également de calculer des données de puissance normalisées Dcn. L'utilité des données de puissance normalisées Dcn sera expliquée lors de la mise en œuvre du modèle de prévision Mp.
Les données de puissance normalisées Dcn sont obtenues par calcul, pour un type de jour et/ou un type de saison de :

- PROFIL (t), obtenu par calcul de la médiane des données de puissance corrigées correspondant au même type de jour et/ou type de saison ;
- la déviation absolue moyenne de la médiane de données de puissance corrigées xi correspondant au même type de jour et/ou type de saison par une relation du type :

[Math. 6]

$$MAD(x_i) = médiane\,(\,|\,x_i - médiane\,(x_i)\,|\,)$$

- une borne de fonctionnement maximale à un instant t par une relation du type :

[Math. 4]

$$BORNEmax(t) = PROFIL(t) + 2.MAD(t)$$

- une borne de fonctionnement minimale par une relation du type :

[Math. 5]

$$BORNEmin(t) = PROFIL(t) - 2.MAD(t)$$

Les bornes de fonctionnement $BORNE_{max}$ et $BORNE_{min}$ sont des bornes de fonctionnement en SNE, pour chaque type de jour de la semaine et chaque saison. Il y a trois types de jour : type 1 du lundi au vendredi, type 2 samedi, type 3 dimanche et jours fériés. Il y a trois saisons : hiver, été et mi saison.
Le modèle de prévision est établi par régression linéaire de type Group-Lasso réalisée selon une formule matricielle du type :

[Math. 9]

$$Q_{j+1}^t = X^t \cdot \beta^t + \varepsilon^t$$

avec :

- t étant un indice temporel allant de 1 à 48, un modèle par demi-heure étant prévu ;
- $Q_{j+1}$ étant la puissance réactive à prévoir pour le jour suivant, le jour j étant le jour courant ;
- X est un vecteur contenant des variables explicatives du modèle ;
- β sont des paramètres à estimer ;
- ε est l'erreur de modélisation.

Il y a autant de modèles que de postes sources (2300) et d'instants t (48).

Dans le cadre de la régression Group-Lasso, les paramètres β sont estimés par un problème d'optimisation du type :

[Math. 10]

$$\arg\min_{\beta}\left(\frac{1}{2}\left\|Q_{j+1} - X\cdot\beta\right\|_2^2 + \lambda\sum_{j=1}^{K} w_j\cdot\left\|\beta_{G_j}\right\|_2\right)$$

Les variables explicatives sont regroupées en K groupes Gj en fonction de leur nature, λ étant un paramètre de régularisation positif, $w_j$ étant un poids strictement positif associé au groupe $G_j$ de variables (généralement ce poids est :

[Math. 11]

$$\sqrt{Card(G_j)}$$

et $\beta_{Gj}$ étant, pour $G_j$ un groupe de variables, le vecteur β restreint aux éléments du groupe $G_j$ :

- Variables autorégressives relatives au passé des puissances réactives ;
- Variables exogènes liées à la température ;
- Variables exogènes liées à la puissance active ;
- Variables exogènes liées au calendrier.

Dans ce mode de réalisation, l'apprentissage du modèle est réalisé pour 2300 postes sources. Le modèle de base est identique pour les 2300 postes sources. L'optimisation du problème Group-Lasso permet de sélectionner pour chaque poste source individuel les variables les plus explicatives, grâce à une estimation des paramètres β au cours du processus d'apprentissage. Ainsi, si la puissance réactive d'un poste source n'est pas thermosensible alors les températures n'interviendront pas dans le processus de prévision, contrairement à un autre poste thermosensible.

L'apprentissage des paramètres est effectué sur un historique de données de puissance corrigées Dcc, sur lesquels des reports de charge et des régulations de puissances réactives ont été corrigés comme expliqué précédemment.

La prévision se fait en appliquant la formule suivante :

[Math. 12]

$$\widehat{Q_{J+1}} = X \cdot \hat{\beta}$$

avec :

[Math. 13]

$$\hat{\beta}$$

les paramètres estimés lors de l'apprentissage des modèles ;

- X les variables explicatives ;

[Math. 14]

$$\widehat{Q_{J+1}}$$

la puissance réactive prévue pour le jour suivant.

La figure 9 représente un dispositif de traitement de données Dm de puissances électriques d'un poste de transformation électrique Po d'un réseau de distribution d'électricité. Le dispositif comporte un circuit de traitement CT pour la mise en œuvre de l'un ou l'autre des modes de réalisation de l'invention présentés ci-dessus. Plus particulièrement, le dispositif est adapté pour la mise en œuvre du procédé présenté ci-dessus de traitement de données Dm de puissance électrique transitant au niveau du poste Po, en vue d'établir le modèle de prévision Mp de la puissance électrique au départ du poste Po. À titre d'exemple, le circuit de traitement CT peut comporter typiquement :

- une interface IN de réception des données de puissance mesurées Dm,
- une mémoire MEM propre à stocker des instructions d'un programme informatique pour mettre en œuvre le procédé selon l'invention, ainsi que des données temporaires (par exemple des données de calcul ou autres) ou des données permanentes (par exemple des codes d'instruction d'un programme informatique au sens de l'invention),
- un processeur PROC relié à la mémoire MEM pour lire les instructions du programme informatique et mettre en œuvre le procédé ci-avant,
- une interface de sortie IHM (par exemple une interface graphique ou plus généralement une interface homme/machine) par exemple pour afficher des données de puissance réactive prévisionnelle.

Le vecteur des variables explicatives contient des puissances du passé $D_{h,reg}$ pouvant être en HSNE. Ces données sont repérées en les comparant aux bornes de fonctionnement en schéma normal d'exploitation obtenues lors du calcul des données de puissance normalisées Dcn. Lorsque les données de la veille du jour d'estimation sont identifiées comme étant en HSNE, le modèle fournit deux résultats ; l'un en schéma normal d'exploitation SNE en remplaçant les données du passé par leur profil calculé précédemment, et l'autre en hors schéma normal d'exploitation en ne modifiant pas les données du passé en HSNE.

À cet effet, ledit programme informatique comporte en outre des instructions de prévision, pour un jour d'estimation j+1, de puissance réactive d'un poste de transformation électrique Po d'un réseau de distribution d'électricité. Lesdites instructions de prévision sont schématisées par l'étape S6 sur la figure 10. Lesdites instructions de prévision comportent les étapes suivantes :

S61. Identification d'un fonctionnement hors schéma normal d'exploitation HSNE ou d'un fonctionnement en schéma normal d'exploitation SNE dudit poste, par comparaison de données de puissance mesurées Dc(j) de puissance active P et de puissance réactive Q de la veille j du jour d'estimation j+1, aux données de puissance normalisées Dcn(j) correspondant au jour et à la saison de la veille j ;

S62. Si un fonctionnement hors schéma normal d'exploitation HSNE est identifié en étape S61, calcul de puissance réactive Q pour le jour d'estimation j+1 :

- selon un premier mode MODE1 par application du modèle de prévision Mp de puissance réactive Q obtenu à l'étape S5 du procédé, à partir des données de puissance normalisées Dcn, notamment en correspondance avec des données historiques $D_{h,reg}$ contenues dans les variables autorégressives du modèle ;
- selon un deuxième mode MODE2 par application du modèle de prévision Mp de puissance réactive obtenu à l'étape S5 du procédé, à partir des données de puissance, notamment des données de puissance historiques $D_{h,reg}$ des variables autorégressives du modèle Mp. Les données de puissance historiques $D_{h,reg}$ contenues dans les variables autorégressives du modèle Mp ne sont pas remplacées dans ce mode.
- Si le fonctionnement identifié en étape S61 est un fonctionnement en schéma normal d'exploitation SNE, les données de puissance historiques $D_{h,reg}$ contenues dans les variables autorégressives du modèle Mp ne sont pas remplacées.

Ce traitement de données à l'étape S6 permet de produire des résultats de prévision en cohérence avec les informations contenues dans les variables autorégressives du modèle Mp. Par exemple, si la puissance réactive au cours de la semaine du jour d'estimation j+1 a été en HSNE, les instructions de prévision décrites ci-avant permettent de produire une estimation de puissance réactive en HSNE le jour j+1 à travers le MODE2, ainsi qu'une estimation de puissance réactive en SNE le jour j+1 à travers le MODE1. Le MODE2 est intéressant par exemple dans les cas où le jour j+1, la puissance réactive du poste est toujours en HSNE. Le MODE1 est intéressant par exemple dans les cas où le jour j+1, la puissance réactive du poste a cessé d'être en HSNE et a basculé vers un fonctionnement en SNE.

## Revendications

1. Procédé de traitement de données de puissance électrique transitant au niveau d'un poste de transformation électrique Po d'un réseau de distribution d'électricité, comprenant les étapes suivantes :

   a. Obtenir des données de puissance active P et de puissance réactive Q mesurées Dm au niveau dudit poste Po sur une période d'observation T ;
   b. Identifier, à partir des données de puissance mesurées Dm sur la période d'observation T, des données de puissance hors schéma normal d'exploitation Dhsne au cours de ladite période d'observation T, par un suivi de variation dans le temps de la puissance réactive Q et/ou de la puissance active P et par détection de sauts dans ladite variation ;
   c. Identifier au moins un type de situation Shsne à l'origine des données de puissance hors schéma normal d'exploitation Dhsne identifiées, ledit type de situation étant au moins un type de situation parmi une régulation de puissance réactive sur le réseau de distribution d'électricité et un report de charge sur le réseau de distribution d'électricité, l'étape d'identification comprenant les sous-étapes suivantes :

      c1- Calculer, à partir des données de puissance mesurées Dm sur la période d'observation T, pour chacune des puissances active P et réactive Q, une première courbe enveloppe $E_{max}$ majorant les données de puissance mesurées Dm sur la période d'observation T et une deuxième courbe enveloppe $E_{min}$ minorant les données de puissance mesurées Dm sur la période d'observation T ;
      c2- Calculer un écart entre la première courbe enveloppe ($E_{max}$) et la deuxième courbe enveloppe ($E_{min}$) pour obtenir une courbe d'écart E ;
      c3- Définir un intervalle d'écart [-E, E], dont la borne supérieure correspond à la courbe d'écart E et la borne inférieure correspond à l'opposé de la courbe d'écart E ;
      c4- calculer 'une dérivée d'une moyenne des première et deuxième courbes enveloppes ($E_{max}$, $E_{min}$), ladite dérivée étant appelée une courbe dérivée;
      c5- Identifier deux sauts $S_T$ sur la période d'observation T, le saut étant défini par un instant où une valeur de la courbe dérivée D est en dehors de l'intervalle d'écart [-E, E], le saut étant de type bas si la valeur est en dessous de l'intervalle d'écart [-E, E] et de type haut si la valeur est au-dessus de l'intervalle d'écart [-E, E] ;
      c6- Calculer une courbe par paliers Cp, pour chacune des puissances active P et réactive Q, un palier Pa étant obtenu par calcul de la moyenne des données de puissance mesurées Dm sur un intervalle temporel Is défini par deux sauts $S_T$ consécutifs, le palier étant de type bas Pab si le premier des deux sauts $S_T$ est bas et de type haut Pah si le premier des deux sauts $S_T$ est haut ;

   d. Calculer des données de puissance corrigées Dcc à partir les données de puissance hors schéma normal d'exploitation Dhsne et en fonction du type de situation Shsne identifié, et calculer des données de puissance normalisées Dcn sur la période d'observation T ;
   e. Etablir, par apprentissage à partir des données de puissance corrigées Dcc, un modèle de prévision Mp de puissance réactive dudit poste en fonctionnement en dehors d'une situation Shsne du type de situation identifié à l'étape c) ;
f. prévoir, pour un jour d'estimation (j+1), une puissance réactive transitant au niveau d'un poste de transformation électrique Po d'un réseau de distribution d'électricité, ladite étape de prévision comprenant une identification d'un fonctionnement hors schéma normal d'exploitation ou d'un fonctionnement en schéma normal d'exploitation dudit poste, par comparaison de données de puissance active et de puissance réactive de la veille (j) du jour d'estimation (j+1), aux données de puissance normalisées Dcn ;

et si un fonctionnement hors schéma normal d'exploitation est identifié, mise en œuvre pour le jour d'estimation de la prévision de puissance réactive calculée:

- selon un premier mode par application du modèle de prévision de puissance réactive obtenu à l'étape e) du procédé, à partir des données de puissance normalisées Dcn ;
- selon un deuxième mode par application du modèle de prévision de puissance réactive obtenu à l'étape e) du procédé, à partir de données de puissance historiques.

2. Procédé selon la revendication 1, dans lequel la situation Shsne est un report de charge sur le réseau de distribution d'électricité.

3. Procédé selon la revendication 2, prise en combinaison avec la revendication 2, dans lequel des paliers du même type ayant lieu simultanément sur les courbes par paliers Cp de chacune des puissances active et réactive sont identifiés comme des paliers de report de charge.

4. Procédé selon la revendication 3, dans lequel l'étape d) de calcul des données de puissance corrigées Dcc comprend les sous-étapes suivantes :

d1. Calcul de puissances corrigées $Y_t$ par une relation du type :

[Math. 1]

$$Y_t = \left( Z_t + \frac{\eta}{\sigma} \right) . \sigma$$

où

[Math. 2]

$$Z_t = (X_t - \eta_x)/\sigma_x$$

$X_t$ désignant des données de puissance hors schéma normal d'exploitation sur une période hors schéma normal d'exploitation au cours d'un des paliers de report de charge, $\eta_x$ la moyenne de $X_t$, $\sigma_x$ l'écart-type de $X_t$ ; $\eta$ désignant la moyenne des puissances corrigées obtenue par calcul par interpolation linéaire entre la moyenne du palier précédent et la moyenne du palier suivant ledit palier ; $\sigma$ désignant l'écart-type des puissances corrigées obtenu par calcul par interpolation linéaire entre l'écart-type du palier précédent et l'écart-type du palier suivant ledit palier ;
d2. Obtention de données de puissances active et réactive corrigées Dcc par substitution desdites données de puissance hors schéma normal d'exploitation $X_t$ par les puissances corrigées $Y_t$ sur le palier de report de charge.

5. Procédé selon la revendication 1, dans lequel la situation Shsne est une régulation de puissance réactive sur le réseau de distribution d'électricité.

6. Procédé selon la revendication 5, prise en combinaison avec la revendication 2, dans lequel la régulation de puissance réactive est identifiée lorsque, dans la courbe par paliers de puissance réactive Cp (Q), deux paliers consécutifs ont une différence de valeur égale ou supérieure à 900 kVAr.

7. Procédé selon la revendication 6, dans lequel l'étape d) de calcul des données de puissance corrigées Dcc comprend les sous-étapes suivantes :

d1'. Calcul de puissances corrigées $Y_t$ par une relation du type :

[Math. 3]

$$Y_t = X_t - \eta_x + \eta$$

$X_t$ désignant des données de puissance hors schéma normal d'exploitation sur une période hors schéma normal d'exploitation au cours d'un palier bas Pab parmi les deux paliers consécutifs identifié comme un palier de régulation de puissance réactive, $\eta_x$ la moyenne de $X_t$ ; $\eta$ désignant la moyenne des puissances corrigées obtenue par calcul par interpolation linéaire entre la moyenne du palier précédent et la moyenne du palier suivant ledit palier Pab ;

d2'. Obtention de données de puissance réactive corrigées Dcc par substitution desdites données de puissance hors schéma normal d'exploitation $X_t$ par les puissances corrigées $Y_t$ sur le palier de régulation de puissance réactive.

8. Procédé selon la revendication 7, dans lequel la sous-étape d2') est réalisée lorsque la période hors schéma normal d'exploitation est égale ou supérieure à une heure.

9. Procédé selon l'une des revendications 4, 7 et 8, dans lequel les données de puissance normalisées Dcn sont obtenues par : calcul à partir des données de puissance corrigées Dcc, pour un type de jour et/ou un type de saison, d'une borne de fonctionnement maximale à un instant t par une relation du type :

[Math. 4]

$$\mathrm{BORNEmax(t)} = \mathrm{PROFIL(t)} + 2 . \mathrm{MAD(t)}$$

et d'une borne de fonctionnement minimale par une relation du type :

[Math. 5]

$$\mathrm{BORNEmin(t)} = \mathrm{PROFIL(t)} - 2 . \mathrm{MAD(t)}$$

où MAD désigne la déviation absolue moyenne de la médiane et se calcule comme suit :

[Math. 6]

$$\mathrm{MAD}(x_i) = \mathrm{médiane} \, ( \, | \, x_i - \mathrm{médiane} \, (x_i) \, | \, )$$

$x_i$ désignant des données de puissance corrigées correspondant au même type de jour et/ou type de saison, et où PROFIL est obtenu par calcul de la médiane des données de puissance corrigées correspondant au même type de jour et/ou type de saison.

10. Procédé selon l'une des revendications 1 à 9, dans lequel le modèle de prévision de puissance réactive est établi par régression linéaire de type Group Lasso en fonction de variables explicatives (X).

11. Procédé selon la revendication 10, dans lequel les variables explicatives sont regroupées par type de variables, ledit type de variables étant choisi parmi une liste comprenant : variables autorégressives représentatives de données historiques $D_{h,reg}$, variables exogènes liées à la température, variables exogènes liées à des données de puissance active, variables exogènes liées à une période de l'année.

12. Dispositif de traitement de données de puissances électriques transitant au niveau d'un poste de transformation électrique Po d'un réseau de distribution d'électricité, le dispositif comportant un circuit de traitement (CT) pour la mise en œuvre du procédé selon l'une des revendications précédentes.

13. Programme informatique comportant des instructions pour la mise en œuvre du procédé selon l'une des revendications 1 à 11, dans lequel lesdites instructions sont exécutées par un processeur (PROC) d'un circuit de traitement (CT).

**Patentansprüche**

1.  Verfahren zur Verarbeitung von elektrischen Leistungsdaten, die an einer Umspannstation Po eines Stromverteilungsnetzes übertragen werden, umfassend die folgenden Schritte:

    a. Erfassen der aktiven Leistungsdaten P und der reaktiven Leistungsdaten Q, die an der Station Po über einen Beobachtungszeitraum T gemessen werden;

    b. Identifizieren von Leistungsdaten außerhalb des normalen Betriebsverlaufs Dhsne während des Beobachtungszeitraums T anhand der gemessenen Leistungsdaten Dm über den Beobachtungszeitraum T durch Verfolgen der zeitlichen Änderung der reaktiven Leistung Q und/oder der aktiven Leistung P und durch Erkennen von Sprüngen in dieser Änderung;

    c. Identifizieren wenigstens eines Situationstyps Shsne, der die Ursache für die identifizierten Leistungsdaten außerhalb des normalen Betriebsverlaufs Dhsne ist, wobei der Situationstyp wenigstens ein Situationstyp aus einer Regelung der reaktiven Leistung im Stromverteilungsnetz und einer Lastübertragung im Stromverteilungsnetz ist, wobei der Identifizierungsschritt die folgenden Teilschritte umfasst:

      c1- Aus den gemessenen Leistungsdaten Dm über den Beobachtungszeitraum T für jede der aktiven Leistungen P und der reaktiven Leistungen Q Berechnen einer ersten Hüllkurve $E_{max}$, die die gemessenen Leistungsdaten Dm über den Beobachtungszeitraum T nach oben begrenzt, und einer zweiten Hüllkurve $E_{min}$, die die gemessenen Leistungsdaten Dm über den Beobachtungszeitraum T nach unten begrenzt;

      c2- Berechnen einer Abweichung zwischen der ersten Hüllkurve ($E_{max}$) und der zweiten Hüllkurve ($E_{min}$), um eine Abweichungskurve E zu erhalten;

      c3- Definieren eines Abweichungsintervalls [-E, E], dessen oberer Grenzwert der Abweichungskurve E entspricht und dessen unterer Grenzwert dem Gegenpol der Abweichungskurve E entspricht;

      c4- Berechnen einer Ableitung eines Mittelwerts der ersten und zweiten Hüllkurve ($E_{max}$, $E_{min}$), wobei die Ableitung als Ableitungskurve bezeichnet wird;

      c5- Identifizieren von zwei Sprüngen $S_T$ im Beobachtungszeitraum T, wobei der Sprung durch einen Zeitpunkt definiert ist, zu dem ein Wert der Ableitungskurve D außerhalb des Abweichungsintervalls [-E, E] liegt, wobei der Sprung vom niedrigen Typ ist, wenn der Wert unterhalb des Abweichungsintervalls [-E, E] liegt, und vom hohen Typ ist, wenn der Wert oberhalb des Abweichungsintervalls [-E, E] liegt;

      c6- Berechnen einer Stufenkurve Cp für jede aus aktiver Leistung P und reaktiver Leistung Q, wobei eine Stufe Pa durch Berechnung des Durchschnitts der gemessenen Leistungsdaten Dm über ein Zeitintervall Is erhalten wird, das durch zwei aufeinanderfolgende Sprünge $S_T$ definiert ist, wobei die Stufe vom niedrigen Typ Pab ist, wenn der erste der beiden Sprünge $S_T$ niedrig ist, und vom hohen Typ Pah ist, wenn der erste der beiden Sprünge $S_T$ hoch ist;

    d. Berechnen der korrigierten Leistungsdaten Dcc aus den Leistungsdaten außerhalb des normalen Betriebsverlaufs Dhsne und in Abhängigkeit vom Typ der identifizierten Situation Shsne und Berechnen der normierten Leistungsdaten Dcn über den Beobachtungszeitraum T;

    e. Anhand der korrigierten Leistungsdaten Dcc Eerstellen eines Prognosemodells Mp für die reaktive Leistung der Station im Betrieb außerhalb einer in Schritt c) ermittelten Situation Shsne.

    f. Vorhersagen einer reaktiven Leistung, die an einem Schätztag (j+1) an einer Umspannstation Po eines Stromverteilungsnetzes fließt, wobei dieser Vorhersageschritt die Identifizierung eines Betriebs außerhalb des normalen Betriebsverlaufs oder eines Betriebs im normalen Betriebsverlauf der Station, durch Vergleich der aktiven und reaktiven Leistungsdaten des Vortages (j) des Schätztages (j+1) mit den normierten Leistungsdaten Dcn umfasst; und, wenn ein Betrieb außerhalb des normalen Betriebsverlaufsplans identifiziert wird, Umsetzen der berechneten Prognose für die reaktive Leistung am Schätztag:

      - gemäß einem ersten Modus durch Anwendung des in Schritt e) des Verfahrens anhand der normierten Leistungsdaten Dcn erhaltenen Prognosemodells für die reaktive Leistung;

      - gemäß einem zweiten Modus durch Anwendung des in Schritt e) des Verfahrens anhand historischer Leistungsdaten erhaltenen Prognosemodells für die reaktive Leistung.

2.  Verfahren nach Anspruch 1, wobei die Situation Shsne eine Lastübertragung auf das Stromverteilungsnetz ist.

**3.** Verfahren nach Anspruch 2 in Kombination mit Anspruch 2, wobei gleichzeitig auftretende Stufen desselben Typs auf den Stufenkurven Cp jeder der aktiven und reaktiven Leistungen als Lastübertragungsstufen identifiziert werden.

**4.** Verfahren nach Anspruch 3, wobei Schritt d) der Berechnung der korrigierten Leistungsdaten Dcc die folgenden Teilschritte umfasst:

d1. Berechnung der korrigierten Leistungen $Y_t$ durch eine Beziehung vom Typ:

[Math. 1]

$$Y_t = \left(Z_t + \frac{\eta}{\sigma}\right) \cdot \sigma$$

wobei

[Math. 2]

$$Z_t = (X_t - \eta_x)/\sigma_x$$

wobei $X_t$ Leistungsdaten außerhalb des normalen Betriebsverlaufs über einen Zeitraum außerhalb des normalen Betriebsverlaufs während einer der Lastübertragungsstufen bezeichnet, $\eta_x$ den Mittelwert von $X_t$ bezeichnet, $\sigma_x$ die Standardabweichung von $X_t$ bezeichnet; wobei $\eta$ den Mittelwert der korrigierten Leistungen bezeichnet, der durch Berechnung mittels linearer Interpolation zwischen dem Mittelwert der vorherigen Stufe und dem Mittelwert der dieser Stufe folgenden Stufe erhalten wird, wobei $\sigma$ die Standardabweichung der korrigierten Leistungen bezeichnet, der durch Berechnung mittels linearer Interpolation zwischen der Standardabweichung der vorherigen Stufe und der Standardabweichung der dieser Stufe folgenden Stufe erhalten wird;
d2. Erhalten der korrigierten aktiven und reaktiven Leistungsdaten Dcc durch Ersetzen der genannten Leistungsdaten außerhalb des normalen Betriebsverlaufs $X_t$ durch die korrigierten Leistungen $Y_t$ auf der Lastübertragungsstufe.

**5.** Verfahren nach Anspruch 1, wobei die Situation Shsne eine Regelung der reaktiven Leistung im Stromverteilungsnetz ist.

**6.** Verfahren nach Anspruch 5 in Kombination mit Anspruch 2, wobei die Regelung der reaktiven Leistung erkannt wird, wenn in der Stufenkurve der reaktiven Leistung Cp (Q) zwei aufeinanderfolgende Stufen eine Wertdifferenz von 900 kVAr oder mehr aufweisen.

**7.** Verfahren nach Anspruch 6, wobei Schritt d) zur Berechnung der korrigierten Leistungsdaten Dcc die folgenden Teilschritte umfasst:

d1'. Berechnung der korrigierten Leistungen $Y_t$ anhand einer Beziehung vom folgenden Typ:

[Math. 3]

$$Y_t = X_t - \eta_x + \eta$$

wobei $X_t$ Leistungsdaten außerhalb des normalen Betriebsverlaufs bezeichnet, über einen Zeitraum außerhalb des normalen Betriebsverlaufs während einer niedrigen Stufe Pab aus den beiden aufeinanderfolgenden Stufen, die als eine Regelungsstufe der reaktiven Leistung identifiziert wurde, wobei $\eta_x$ den Mittelwert von $X_t$ bezeichnet; wobei $\eta$ den Mittelwert der korrigierten Leistungen bezeichnet, der durch lineare Interpolation zwischen dem Mittelwert der vorherigen Stufe und dem Mittelwert der darauffolgenden Stufe, der Stufe Pab, berechnet wurde;
d2'. Erhalt von korrigierten Daten der reaktiven Leistung Dcc durch Ersetzen der Leistungsdaten außerhalb des normalen Betriebsverlaufs $X_t$ durch die korrigierten Leistungen $Y_t$ auf der Regelungsstufe der reaktiven Leistung.

**8.** Verfahren nach Anspruch 7, wobei der Teilschritt d2') durchgeführt wird, wenn der Zeitraum außerhalb des normalen Betriebsverlaufs gleich oder größer als eine Stunde ist.

**9.** Verfahren nach einem der Ansprüche 4, 7 und 8, wobei die normierten Leistungsdaten Dcn erhalten werden durch: Berechnung aus den korrigierten Leistungsdaten Dcc für einen Tagestyp und/oder einen Saisontyp eines maximalen Betriebsgrenzwerts zu einem Zeitpunkt t durch eine Beziehung des Typs:

[Math. 4]

$$BORNEmax(t) = PROFIL(t) + 2. MAD(t)$$

und eines minimalen Betriebsgrenzwerts durch eine Beziehung des folgenden Typs:

[Math. 5]

$$BORNEmin(t) = PROFIL(t) - 2. MAD(t)$$

wobei MAD die mittlere absolute Abweichung vom Median bezeichnet und wie folgt berechnet wird:

[Math. 6]

$$MAD(x_i) = Median\left(\,|\,x_i - Median\,(x_i)\,|\,\right)$$

wobei $x_i$ korrigierte Leistungsdaten bezeichnet, die dem gleichen Tagestyp und/oder Saisontyp entsprechen, und wobei PROFIL durch Berechnung des Medians der korrigierten Leistungsdaten erhalten wird, die dem gleichen Tagestyp und/oder Saisontyp entsprechen.

10. Verfahren nach einem der Ansprüche 1 bis 9, wobei das Prognosemodell der reaktiven Leistung durch lineare Regression vom Typ Group Lasso in Abhängigkeit von erklärenden Variablen (X) erstellt wird.

11. Verfahren nach Anspruch 10, wobei die erklärenden Variablen nach Variablentypen gruppiert werden, wobei der Variablentyp aus einer Liste gewählt wird, umfassend: autoregressive Variablen, die historische Daten $D_{h,reg}$ repräsentieren, exogene Variablen, die mit der Temperatur zusammenhängen, exogene Variablen, die mit Wirkleistungsdaten zusammenhängen, exogene Variablen, die mit einer Jahreszeit zusammenhängen.

12. Vorrichtung zur Verarbeitung von elektrischen Leistungsdaten, die an einer Umspannstation Po eines Stromverteilungsnetzes durchlaufen, wobei die Vorrichtung eine Verarbeitungsschaltung (CT) zur Durchführung des Verfahrens gemäß einem der vorhergehenden Ansprüche umfasst.

13. Computerprogramm mit Anweisungen zur Durchführung des Verfahrens nach einem der Ansprüche 1 bis 11, wobei die Anweisungen von einem Prozessor (PROC) einer Verarbeitungsschaltung (CT) ausgeführt werden.

## Claims

1. A method for processing electrical power data transiting at an electrical transformation station Po of an electricity distribution network, comprising the following steps:

   a. Obtaining data of active power P and reactive power Q measured Dm at said station Po over an observation period T;
   b. Identifying, from the measured power data Dm over the observation period T, power data outside the normal operating pattern Dhsne during said observation period T, by monitoring the variation over time of the reactive power Q and/or the active power P and by detecting jumps in said variation;
   c. Identifying at least one type of situation Shsne at the origin of the identified power data outside the normal operating pattern Dhsne, said type of situation being at least one type of situation among a reactive power regulation on the electricity distribution network and a load transfer on the electricity distribution network, the identification step comprising the following sub-steps:

   c1- Calculating, from the measured power data Dm over the observation period T, for each of the active P and reactive Q powers, a first envelope curve $E_{max}$ increasing the measured power data Dm over the observation period T and a second envelope curve $E_{min}$ reducing the measured power data Dm over the observation period T;

c2- Calculating a difference between the first envelope curve ($E_{max}$) and the second envelope curve ($E_{min}$) to obtain a difference curve E;

c3- Defining a difference interval [-E, E], the upper limit of which corresponds to the difference curve E and the lower limit corresponds to the opposite of the difference curve E;

c4- calculating a derivative of an average of the first and second envelope curves ($E_{max}$, $E_{min}$), said derivative being called a derived curve;

c5- Identifying two jumps $S_T$ over the observation period T, the jump being defined by a time when a value of the derived curve D is outside the difference interval [-E, E], the jump being of the low type if the value is below the difference interval [-E, E] and of the high type if the value is above the difference interval [-E, E];

c6- Calculating a curve by steps Cp, for each of the active power P and reactive power Q, a step Pa being obtained by calculating the average of the measured power data Dm over a time interval Is defined by two consecutive jumps $S_T$, the step being of the low type Pab if the first of the two jumps $S_T$ is low and of the high type Pah if the first of the two jumps $S_T$ is high;

d. Calculating corrected power data Dcc from the power data outside the normal operating pattern Dhsne and depending on the type of identified situation Shsne, and calculating normalised power data Dcn over the observation period T;

e. Establishing, by learning from the corrected power data Dcc, a reactive power prediction model Mp of said station in operation outside a situation Shsne of the type of situation identified in step c);

f. providing, for an estimation day (d+1), a reactive power transiting at an electrical transformation station Po of an electricity distribution network, said prediction step comprising an identification of an operation outside the normal operating pattern or an operation in a normal operating pattern of said station, by comparing active power and reactive power data from the day (d) before the estimation day (d+1), with the normalised power data Dcn;

and if an operation outside the normal operating schedule is identified, implementing, for the estimation day, the calculated reactive power prediction:

- according to a first mode by applying the reactive power prediction model obtained in step e) of the method, from the normalised power data Dcn;
- according to a second mode by applying the reactive power prediction model obtained in step e) of the method, from historical power data.

2. The method according to claim 1, wherein the situation Shsne is a load transfer on the electricity distribution network.

3. The method according to claim 2, taken in combination with claim 2, wherein steps of the same type occurring simultaneously on the step curves Cp of each of the active and reactive powers are identified as load transfer steps.

4. The method according to claim 3, wherein the step d) of calculating the corrected power data Dcc comprises the following sub-steps:

d1. Calculation of corrected powers $Y_t$ by a relation of the type:

[Math. 1]

$$Y_t = \left( Z_t + \frac{\eta}{\sigma} \right) \cdot \sigma$$

where

[Math. 2]

$$Z_t = (X_t - \eta_x)/\sigma_x$$

$X_t$ designating power data outside the normal operating pattern over a period outside the normal operating pattern during one of the load transfer steps, $\eta_x$ the average of $X_t$, $\sigma_x$ the standard deviation of $X_t$; $\eta$ designating the

average of the corrected powers obtained by calculation by linear interpolation between the average of the previous step and the average of the step following said step; σ designating the standard deviation of the corrected powers obtained by calculation by linear interpolation between the standard deviation of the previous step and the standard deviation of the step following said step;

d2. Obtaining corrected active and reactive power data Dcc by substituting said power data outside the normal operating diagram $X_t$ with the corrected powers $Y_t$ on the load transfer step.

5. The method according to claim 1, wherein the situation Shsne is a reactive power regulation on the electricity distribution network.

6. The method according to claim 5, taken in combination with claim 2, wherein the reactive power regulation is identified when, in the reactive power step curve Cp (Q), two consecutive steps have a value difference equal to or greater than 900 kVAr.

7. The method of claim 6, wherein the step d) of calculating the corrected power data Dcc comprises the following sub-steps:

d1'. Calculation of corrected powers $Y_t$ by a relation of the type:

[Math. 3]

$$Y_t = X_t - \eta_x + \eta$$

$X_t$ designating power data outside the normal operating pattern over a period outside the normal operating pattern during a low step Pab among the two consecutive steps identified as a reactive power regulation step, $\eta_x$ the average of $X_t$; $\eta$ designating the average of the corrected powers obtained by calculation by linear interpolation between the average of the previous step and the average of the step following said step Pab;

d2. Obtaining corrected reactive power data Dcc by substituting said power data outside the normal operating diagram $X_t$ with the corrected powers $Y_t$ on the reactive power regulation step.

8. The method according to claim 7, wherein the sub-step d2') is carried out when the period outside the normal operating pattern is equal to or greater than one hour.

9. The method according to one of claims 4, 7 and 8, wherein the normalised power data Dcn is obtained by: calculating from the corrected power data Dcc, for a type of day and/or a type of season, a maximum operating boundary at a time t by a relationship of the type:

[Math. 4]

$$LIMITmax(t) = PROFILE(t) + 2. MAD(t)$$

and a minimum operating terminal by a relationship of the type:

[Math. 5]

$$LIMITmin(t) = PROFIL(t) - 2. MAD (t)$$

where MAD designates the mean absolute deviation from the median and is calculated as follows:

[Math. 6]

$$MAD(x_i) = median (| x_i - median (x_i) |)$$

$x_i$ designating corrected power data corresponding to the same type of day and/or type of season, and where PROFIL is obtained by calculating the median of the corrected power data corresponding to the same type of day and/or type of season.

10. The method according to one of claims 1 to 9, wherein the reactive power prediction model is established by Group Lasso type linear regression as a function of explanatory variables (X).

11. The method according to claim 10, wherein the explanatory variables are grouped by type of variables, said type of variables being selected from among a list comprising: self-regressive variables representative of historical data $D_{h,reg}$, exogenous variables related to the temperature, exogenous variables related to active power data, exogenous variables related to a period of the year.

12. A device for processing data of electrical powers transiting at an electrical transformation station Po of an electricity distribution network, the device including a processing circuit (CT) for implementing the method according to one of the preceding claims.

13. A computer program including instructions for implementing the method according to one of claims 1 to 11, wherein said instructions are executed by a processor of a processing circuit.

[Fig. 1]

FIG. 1

[Fig. 2a]

FIG. 2a

[Fig. 2b]

## FIG. 2b

[Fig. 3]

## FIG. 3

[Fig. 4]

$$E_{max} \geq Dm\,(T)$$
$$E_{min} \leq Dm\,(T)$$

S21

$$E = E_{max} - E_{min}$$

S22

$$[-E,\ E]$$

S23

$$D = dev\left(\frac{Emax+Emin}{2}\right)$$

S24

$$S_T? \longrightarrow I$$

S25

$$C_p\,(D_m,\ Is)$$

S26

# FIG. 4

[Fig. 5]

FIG. 5

[Fig. 6]

FIG. 6

[Fig. 7]

26

Dhsne ◀— (Cp, Shsne)?

S31

S32

$$\left\{\begin{array}{c}(Pab, Pah); Cp(P) \\ <=> \\ (Pab, Pah); Cp(Q)\end{array}\right\}$$

$$\Delta(Pa, Cp(Q)) \geq 900 \text{ kVAr}$$

Shsne$_{CH}$

Shsne$_{GR}$

## FIG. 7

[Fig. 8a]

$$Y_t = (Z_t + \eta/\sigma).\sigma ;$$
$$Z_t = (X_t - \eta_x)/\sigma_x$$

S411

$$Y_t \leftarrow X_t$$

$$(Dcc, t)$$

S421

## FIG. 8a

[Fig. 8b]

$$Y_t = X_t - \eta_x + \eta$$ — S412

$$Y_t \leftarrow X_t$$

$$(Dcc, t)$$ — S422

## FIG. 8b

[Fig. 8c]

FIG. 8c

[Fig. 9]

FIG. 9

[Fig. 10]

FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. N. FIGALGO**. Forecasting Active and Reactive Power at Substations' Transformers. IEEE, 26 June 2003